# EUROPÄISCHE PATENTSCHRIFT

(11) **EP 1 965 973 B1**
(45) Veröffentlichungstag und Bekanntmachung des Hinweises auf die Patenterteilung: **27.02.2013**
(21) Anmeldenummer: 06807620.7
(22) Anmeldetag: 27.10.2006
(51) Int. Cl.: B32B 5/18, B32B 27/06

(54) **VERFAHREN ZUR HERSTELLUNG MEHRFARBIGER FOLIEN**
METHOD OF PRODUCING MULTICOLOURED FILMS
PROCEDE DE FABRICATION DE FEUILLES MULTICOLORES

(30) Priorität: 13.12.2005 DE 102005059359
(43) Veröffentlichungstag der Anmeldung: 10.09.2008
(73) Patentinhaber: Benecke-Kaliko AG, 30419 Hannover (DE)
(72) Erfinder: ROST, Eberhard, 73431 Aalen (DE); HÖFCHEN, Siegfried, 73333 Gingen (DE); REIK, Matthias, 73037 Göppingen-Manzen (DE)
(74) Vertreter: Finger, Karsten
(86) Internationale Anmeldenummer: PCT/EP2006/067873
(87) Internationale Veröffentlichungsnummer: WO 2007/068528

(56) Entgegenhaltungen:
- WO-A-03/080397
- DE-A1- 10 121 518

## Beschreibung

Die Erfindung betrifft ein Verfahren zur Herstellung mehrfarbiger Folien, bei dem auf eine Trägerfolie mindestens zwei unterschiedlich farbige Oberfolien laminiert und ggf. weitere Lack- oder Kleberschichen aufgebracht werden, wobei die Oberfläche der Oberfolien bzw. des Folienverbundes mit einer Oberflächenstruktur versehen, vorzugsweise geprägt und danach ggf. geschnitten wird. Die Oberflächenstruktur besteht dabei z. B. aus einer lederähnlichen oder technischen Narbstruktur.

Die DE 195 30 757 A1 offenbart ein Verfahren und eine Vorrichtung zur Herstellung von zwei- oder mehrfarbigen Folien z. b. für Armaturenbretter, bei dem eine aus einem Kunststoff bestehende Trägerfolie mit Hilfe einer besonders geformten Extrusionsdüse mit weiteren Kunststoffschichten oder -folien unterschiedlicher Farbgebung belegt wird. Hierzu weist die Extruderdüse einen Spalt bzw. Austrittsquerschnitt für das Extrudat der Trägefolie aus, über dem zwei weitere Austrittsquerschnitte für die farbigen Deckschichten angeordnet sind, deren Ausflußwege oder-kanäle durch einen keilförmigen oder dreiecksförmigen Vorsprung bis kurz vor der Auflage des farbigen Obermateriales/Deckschichtmateriales auf der Trägerfolie getrennt sind. Hierdurch fließt das Extrudat für die Deckschichten erst kurz vor dem Auftreffen auf der Trägerfolie zusammen, wodurch sich zwar eine leidlich gute Nahtführung zwischen den unterschiedlichen Farbereichen ergibt, letztlich aber ein leichtes Mischen der Farben im Übergangsbereich nicht vermieden werden kann. Demzufolge ist diese Verfahren eher dort anwendbar, wo lediglich unterschiedliche Farbtiefen, beispielsweise also unterschiedliche Grautöne aneinander stoßen.

Die DE 101 21 518 A1 offenbart ein Verfahren zur Herstellung einer zwei- oder mehrfarbigen Schaumfolie, bei der eine tragende Unterschicht aus Schaumfolie mit einer Deckschicht belegt wird, die ihrerseits wieder aus mindestens zwei Schichten besteht, nämlich einer Trägerschicht und mindestens einer weiteren Schicht. Die Trägerschicht in einer ersten Farbe weist hierbei eingewalzte oder anderweitig profilierte Vertiefungen auf, in welche die weitere Schicht einer anderen Farbe so eittgelegt wird, dass eine bündige Außenoberfläche zwischen Trägerschicht und weiterer Schicht entsteht. Das Aufbringen der Schichten erfolgt dabei durch einen Extrusionsprozess. Es ergeben sich recht gute Farbübergänge, jedoch erfordert das Herstellungsverfahren durch die erforderlichen eng tolerierten Profilierungen und mehrere Extruder einen erheblichen maschinellen und zeitlichen Aufwand.

Die WO 03/080397 A1 offenbart eine mehrfarbige Kunststofffolie, bei der die obere Deckschicht oder Decklage aus verschiedenen Lagen besteht. Die aus mehreren Lagen bestehende Deckschicht wird auf eine unten liegende Schaumschicht auflaminiert. Die Deckschicht ist dabei so aufgebaut, dass mindestens eine Kante einer ersten Decklage durch eine Kante einer zweiten Decklage überlappt wird .

Für die Erfindung bestand also die Aufgabe, ein Verfahren für die Herstellung mehrfarbiger Folien bereitzustellen, bei dem eine scharfe, deutlich konturierte und saubere Farbtrennung einzelner Farbschichten ohne Mischzonen erreichbar ist, welches einfach, kostengünstig und mit relativ geringem Fertigungsaufwand durchzuführen ist und welches mit einer solchen Qualität auch für das laminieren stark unterschiedlicher Farben geeignet ist.

Gelöst wir diese Aufgabe durch die Merkmale des Hauptanspruchs. Dabei wird als Trägerfolie eine Folie aus thermoplastischem Schaumkunststoff eingesetzt wird, wobei die unterschiedlich farbigen Oberfolien jeweils zeitlich nacheinander auf die Trägerfolie laminiert werden und die jeweils nachlaufend auflaminierte Folie mindestens die vorlaufend auflaminierte Folie in ihrem Nahtbereich überlappt

Durch eine solche Verfahrensweise entsteht eine so genannte "trägerlose Schaumfolie", also eine mit einer rückseitigen Schaumschicht und eine Deckschicht versehene Folie ohne weitere tragende / verstärkende Zwischenschichten, mit einer exakt und gerade verlaufenden Trennnaht zwischen den beiden Farbschichten, ohne Auswischungen oder Farbverläufe und ohne ein mäandrieren der Nahtbereiche. Solche "trägerlosen Schaumfolien" oder "trägerlose Schäume" können relativ hohe Umformungsgrade bei der nachfolgenden Verformung ertragen, also etwa beim Aufbringen auf Armaturenbrett- oder Türverkleidungsträgern für Kraftfahrzeuge. Sie sind damit den Kunstledern, bei denen eine Trägerschicht z. B. aus Textilfasern im Produkt eingebunden ist und dort eben auch bei der Weiterverarbeitung verbleibt, in der Verformbarkeit weit überlegen.

Die überraschende Güte des Nahtbereiches ist bei diesem sehr einfachen Verfahren darauf zurückzuführen, dass durch das zeitlich versetzte Aufbringen der Oberfolien bereits eine gewisse Fixierung jeder Oberfolie auf der tragenden Schaumfolie erfolgt, wodurch die definierte Anlage und Überlappung der jeweils nachlaufenden Oberfolien sich wesentlich sicherer und leichter gestaltet. Würde man hier ein konventionelles Verfahren anwenden, bei dem die erwärmte Oberfolien gleichzeitig kaschiert werden, so könnten durch entstehende Zugspannungen, durch Wärmestau und durch Temperaturführungseigenarten Breiteneinsprünge in den Oberfolien entstehen, die eine nicht definierte und mäandrierende Überlappung begünstigen.

Eine vorteilhafte Ausbildung besteht darin, dass das Einbringen der Oberflächenstruktur durch einen Walzvorgang nach dem Laminieren auf die Trägerfolie erfolgt, vorzugsweise mit Hilfe von Prägewalzen, wobei der Überlappungsbereich / Nahtbereich der Oberfolien in seiner Schichtdicke reduziert wird. Im Zusammenwirken mit der durch die zeitlich versetze Auflage bedingte Fixierung der einzelnen Oberfolien gelingt es hier mit Hilfe einer solchen Ausbildung in einem einzigen weiteren Fertigungsschritt, die Schichtdicke der nebeneinander liegenden Farbschichten und den Nahtübergangsbereich sehr genau einzustellen, was wiederum wichtig für den sauberen Nahtverlauf ist.

Eine weitere vorteilhafte Ausbildung besteht darin, dass die Oberfolien jeweils vor dem Laminieren über beheizte Rollenlänge geführt und dadurch vorgewärmt werden. Hierdurch lässt sich die Reaktion der Oberfolien mit der tragenden Schaumfolie beeinflussen und damit die für die weiteren Herstellungsschritte so wichtige anfängliche Fixierung der einzelnen Oberfolien auf der Trägerfolie.

Die jeweiligen Oberfolien werden mit Hilfe von ggf. ebenfalls beheizten Auflagewalzen unter Druck auf die Trägerfolie aufgebracht. Verteilhafterweise werden hierzu die Oberfolien durch die beheizten Rollen und Walzen auf eine Temperatur von 90 bis 180° C vorgewärmt, vorzugsweise auf 150° C. Diese Temperaturen haben sich im Zusammenhang mit dem Walzdruck der Auflagewalzen als besonders günstig für das Verfahren herausgestellt.

Eine weitere vorteilhafte Ausbildung besteht darin, dass mindestens die jeweils zeitlich nachlaufende Oberfolie über eine Führungseinrichtung im Hinblick auf ihre zur Laminierung auf die Trägerfolie erforderlichen Auflageposition quer zur Fertigungsrichtung gesteuert verschiebbar ist. Hierdurch lässt sich eine ausreichend genaue und einfache einachsige Steuerung realisieren, durch die die jeweilige Oberfolie exakt und im Zusammenhang mit den übrigen Parametern Temperatur und Auflagedruck so positionierbar ist, dass sich ein sauberer Nahtbereich ergibt. Natürlich kann auch das Auflegen der zeitlich vorlaufenden Oberfolie oder die Position der tragenden Schaumfolie quer zur Fertigungsrichtung gesteuert werden, wenn auch vielleicht mit etwas größerem Aufwand.

Vorteilhafterweise bestehen für die bestmögliche Nutzung eines solchen Herstellungsverfahrens die Trägerfolie aus Polyolefin-Schaumkunststoff und die Oberfolien aus thermoplastischem Olefin bestehen. Beide Kunststoffarten lassen sich durch die genannten Temperatur- und Druckführungen bei üblichen Temperaturen gut verarbeiten und im erforderlichen flüssig-pastösem Herstellungszustand handhaben. Gleiches gilt für Träger- und Oberfolien aus PVC-Kunststoffen oder Polyurethan.

Anhand eines Ausführungsbeispieles soll das erfindungsgemäße Verfahren näher verdeutlicht werden.

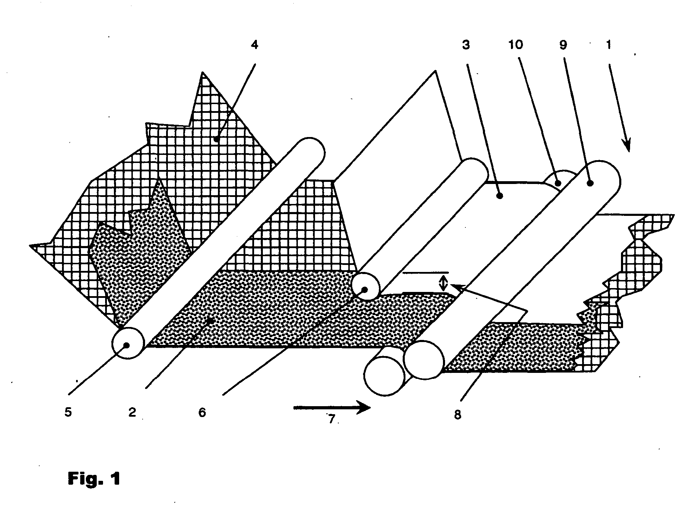

Fig. 1 zeigt hierzu eine Prinzipskizze einer Herstellungsanlage für eine erfindungsgemäße trägerlos Schaumfolie 1 mit einer zweifarbigen Oberseite.

Die trägerlose Schaumfolie 1 besteht dabei aus unterschiedlich farbigen Kunststoffstreifen, welche als Oberfolien 2 und 3 auf eine tragende Schicht aus Schaumkunststoff 4 auflaminiert werden.

Hierzu dienen Walzenrollgänge bzw. Kaschierwerke, von denen hier der Übersichtlichkeit halber nur jeweils die letzten Auflagewalzen 5 und 6 dargestellt sind. Die Oberfolie 2 läuft dabei unter der erwärmten Auflagewalze 5 auf die tragende Schaumfolie aus Schaumkunststoff 4 (Trägerfolie) auf und wird durch Druck und Wärme in ihrer Auflage fixiert. Die tragende Folie besitzt dabei eine Dicke von 1 bis 5 mm.

Zeitlich und in Fertigungsrichtung 7 versetzt wird dann die Oberfolie 3 so aufgebracht, dass auch Sie durch Druck und Wärme der geheizten Auflagewalze 6 fixiert, diesmal sowohl auf der tragenden Schicht (Schaumfolie) 4 als auch im Überlappungsbereich 8 auf der vorlaufend aufgebrachten Oberfolie 2.

In einem dem Laminieren sich anschließenden Schritt werde die Oberfolien 2 und 3 mit einer Oberflächenstruktur versehen. Dies geschieht durch die Prägewalze 9, welche mit einer Gegenwalze 10 abgestützt wird. Der Überlappungsbereich / Nahtbereich der Oberfolien wird damit in seiner Schichtdicke reduziert und vollständig fixiert. Die Oberfolien 2 und 3 können vorher noch mit einer Lackschicht versehen werden, die vielerlei Zwecke erfüllen kann, beispielsweise Schutz vor mechanischen Schädigungen, Verhindern von Versprödung durch UV-Einstrahlung, etc. Auf der Unterseite der tragenden Schicht 4 wird vorher ein Rückenseitenhaftlack aufgebracht, der die spätere Verbindung mit einem räumlichen Körper, z. B einer Türverkleidung eines Kraftfahrzeuges, erleichtert.

### Bezugszeichenliste

### (Teil der Beschreibung)

- 1: Trägerlose Schaumfolie
- 2, 3: Oberfolie
- 4: Tragende Folie aus Schaumkunststoff
- 5: Auflagewalze
- 6: Auflagewalze
- 7: Fertigungsrichtung
- 8: Überlappungsbereich
- 9: Prägewalze
- 10: Gegenwalze

## Patentansprüche

1. Verfahren zur Herstellung mehrfarbiger Folien, bei dem auf eine Trägerfolie (4) mindestens zwei unterschiedlich farbige Oberfolie (2, 3) laminiert und ggf. weitere Lack- oder Kleberschichen aufgebracht werden, wobei die Oberfläche der Oberfolien bzw. des Folienverbundes mit einer Oberflächenstruktur versehen, vorzugsweise geprägt und danach ggf. geschnitten wird, wobei als Trägerfolie (4) eine Folie aus thermoplastischem Schaumkunststoff eingesetzt wird, wobei die unterschiedlich farbigen Oberfolien (2, 3) jeweils zeitlich nacheinander auf die Trägerfolie (4) laminiert werden und die jeweils nachlaufend auflaminierte Folie mindestens die vorlaufend auflaminierte Folie in ihrem Nahtbereich überlappt.

2. Verfahren nach Anspruch 1, **dadurch gekennzeichnet, dass** das Einbringen der Oberflächenstruktur durch einen Walzvorgang nach dem Lammieren auf die Trägerfolie (4) erfolgt, vorzugsweise mit Hilfe von Prägewalze (9), wobei der Überlappungsbereich / Nahtbereic (8) der Oberfolien (2, 3) in seiner Schichtdicke reduziert wird.

3. Verfahren nach Anspruch 1 oder 2, **dadurch gekennzeichnet, dass** die Oberfolien (2, 3) jeweils vor dem Laminieren über beheizte Rollengän (5, 6) geführt und dadurch vorgewärmt werden.

4. Verfahren nach Anspruch 3, **dadurch gekennzeichnet, dass** die Oberfolien (2, 3) auf eine Temperatur von 90 bis 180° C vorgewärmt werden, vorzugsweise auf 150° C.

5. Verfahren nach Anspruch 1 bis 4, **dadurch gekennzeichnet, dass** mindestens die jeweils zeitlich nachlaufende Oberfolie (3) über eine Führungseinrichtung im Hinblick auf ihre zur Laminierung auf die Trägerfolie (4) erforderlichen Auflageposition quer zur Fertigungsrichtung gesteuert verschiebbar ist.

## Claims

1. Method of producing multicoloured films, in which two differently coloured upper films (2, 3) are laminated onto a carrier film (4) and, if appropriate, further varnish or adhesive layers are applied, the surface of the upper films or of the film composite being provided with a surface structure, preferably embossed, and possibly subsequently cut, the carrier film (4) used being a film made of thermoplastic foamed plastic, the differently coloured upper films (2, 3) each being laminated chronologically one after another onto the carrier film (4) and the respectively following film laminated on overlapping at least the preceding film laminated on in their seam area.

2. Method according to Claim 1, **characterized in that** the introduction of the surface structure is carried out by a rolling operation following the lamination to the carrier film (4), preferably with the aid of embossing rolls (9), the layer thickness of the upper films (2, 3) being reduced in their overlapping area/seam area (8).

3. Method according to Claim 1 or 2, **characterized in that**, in each case before the lamination, the upper films (2, 3) are led over a series of heated rollers (5, 6) and pre-heated as a result.

4. Method according to Claim 3, **characterized in that** the upper films (2, 3) are pre-heated to a temperature of 90 to 180°C, preferably to 150°C.

5. Method according to Claims 1 to 4, **characterized in that**, via a guiding device, at least the respectively chronologically following upper film (3) can be displaced transversely with respect to the production direction under control with regard to its contact position required for the lamination to the carrier film (4).

## Revendications

1. Procédé de fabrication de feuilles multicolores dans lequel au moins deux feuilles supérieures (2, 3) de couleurs différentes et éventuellement d'autres couches de vernis ou de feuilles sont appliquées sur une feuille de support (4),
la surface des feuilles supérieures ou de l'ensemble de feuilles étant dotée d'une structure de surface, de préférence par gaufrage, et étant ensuite éventuellement découpée, en utilisant comme feuille de support (4) une feuille en matière synthétique thermoplastique moussée,
chacune des feuilles supérieures (2, 3) de couleurs différentes étant stratifiée successivement sur la feuille de support (4), chaque feuille stratifiée ensuite recouvrant au moins la partie de cordon de la feuille stratifiée précédemment.

2. Procédé selon la revendication 1, **caractérisé en ce que** l'apport de la structure de surface s'effectue par une opération de laminage après stratification sur la feuille de support (4), de préférence à l'aide de cylindres de gaufrage (9), l'épaisseur de la partie de superposition ou de couture (8) des feuilles supérieures (2, 3) étant ainsi réduite.

3. Procédé selon les revendications 1 ou 2, **caractérisé en ce que** chacune des feuilles supérieures (2, 3) est amenée avant sa stratification par des pistes (5, 6) à rouleaux chauffés et est ainsi préchauffée.

4. Procédé selon la revendication 3, **caractérisé en ce que** les feuilles supérieures (2, 3) sont préchauffées à une température de 90 à 180°C et de préférence de 150°C.

5. Procédé selon les revendications 1 à 4, **caractérisé en ce qu'**au moins les feuilles successives (3) peuvent être déplacées de manière contrôlée dans la direction transversale à la direction de fabrication de manière à être placées correctement pour être stratifiées sur la feuille de support (4).
